# EUROPEAN PATENT APPLICATION

(11) **EP 0 597 614 A1**
(43) Date of publication of application: **18.05.1994**
(21) Application number: 93308713.2
(22) Date of filing: 01.11.1993
(51) Int. Cl.: F16F 1/38, B60G 7/00

(54) **Resilient bushings**

(30) Priority: 10.11.1992 US 973919
(71) Applicant: GENCORP INC., Fairlawn, Ohio 44333-3300 (US)
(72) Inventor: Carper, Robert L., Fort Wayne, Indiana 46804 (US); Spalding James A., Kokomo, Indiana 46902 (US)
(74) Representative: Stoner, Gerard Patrick

(57) **Abstract**

An elastomeric bushing (25) for the suspension system of an automobile has a plastic/metal insert (15) which is successively surrounded by rubber and a cylindrical metal band. The insert comprises a central metal cylinder (16) to which is secured a durable plastic material, such as nylon, which has a longitudinal sectional profile which includes a smoothly rounded bulbous portion (20) which curves outwardly from the inner metal cylinder (16). The plastic bulbous portion (20), in said profile, includes a pair of sides which diverge in the direction of the metal cylinder and then curve outwardly towards adjacent opposing ends of the metal cylinder where they terminate.

## Description

The invention relates to resilient bushings, such as are used in automobile suspension systems. More particularly, the invention is concerned with insert components of the bushing.

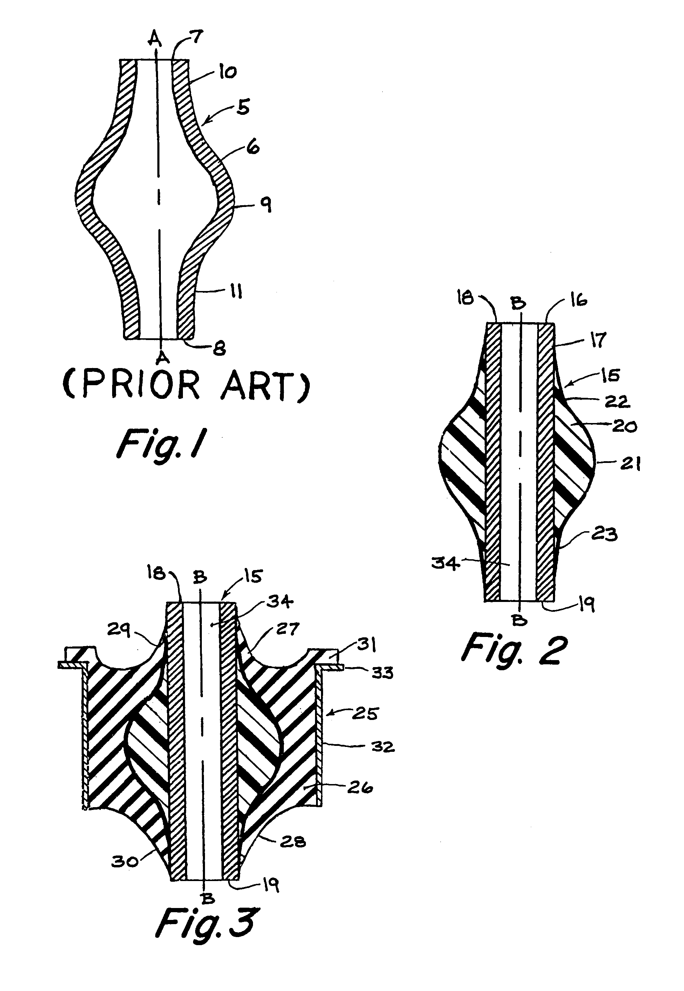

Automotive suspension systems utilize elastomeric bushing isolators to enhance ride and handling of the vehicle. In the past, the orientation of the bushings on vehicles has caused torsional loading of the bushing, as the suspension system traverses through its total ride travel. Such loading adds considerable, undesirable parasitic rate to the suspension spring rate. One method of minimizing the parasitic rate is to orient the bushing on the vehicle such that the center axis of the bushing is vertically disposed. In such position, the bushing is loaded conically during suspension displacements. It has been found highly beneficial to use in the bushing a bulge-shaped inner metal insert, as shown in Figure 1 of the drawing.

These shaped inserts are relatively expensive to manufacture and, when subjected to an axial load, are not as strong as a more conventional, hollow cylindrical metal insert, as shown in US-A-4, 139,246 and US-A-4, 157,227. US-A-4,671,694 discloses a stronger, hollow, cylindrical insert with an integral, enlarged metal portion midway between its opposing ends. US-A-4,129,394 discloses a conventional universal joint with a surrounding metal casing which has a configuration similar to that of the aforementioned hollow metal insert with the bulbous sidewall.

The general aim herein is to provide new constructions for resilient bushings, and in particular for bulbous inserts used in such bushings. Preferably, it is desired to retain some of the above- mentioned advantages while losing some of the disadvantages associated with them.

In the invention, we propose forming a bushing insert comprising a central axially-extending metal core with a longitudinally intermediate bulbous portion of durable plastics material, typically substantially rigid, axially secured thereon e.g. by adhesion. The core may be a cylindrical tube or rod. By using plastics to form the bulbous portion, machining of metal can be reduced or eliminated so that the outer surface of the metal core may be substantially plain if desired (although some degree of radial non-uniformity may optionally be provided to assist secure fixing of the plastics on it).

The plastics bulbosity may be in the form of a sleeve around the core. Such a sleeve may be of uniform radial cross-section around the core. The radial cross-sectional shape of the bulbosity is desirably smoothly curved over its outer surface. Preferably, a longitudinally central convexity merges via concavities to thinner flanking regions approaching the ends of the core.

The insert itself forms an aspect of the invention. A further aspect is a bushing comprising the insert, a rigid outer retainer, and a resilient portion, typically of an elastomer such as rubber, between them. Typically the outer retainer is a metal sleeve, which may be cylindrical. The resilient portion is preferably shaped to complement the bulbous portion of the insert.

Some aspects are set out in the claims.

In one general aspect, we provide an automotive bushing which comprises a centrally disposed hollow, cylindrical metal insert to which is bonded plastic having an outwardly curving surface which reaches a smoothly rounded apex midway between the ends of the insert. The combination metal/plastic insert is surrounded by resilient elastomeric material which, in turn, is at least partially surrounded by a cylindrical metal sleeve.

The following description of an embodiment will be better understood by having reference to the accompanying drawing, wherein:
Figure 1 is a cross section of a hollow, prior art bulbous metal insert;
Figure 2 is a similarly shaped bulbous insert which is made in accordance with the invention; and
Figure 3 is a cross section of an automotive suspension system bushing which utilizes the bulbous insert of Figure 2.

### Detailed Description

With reference to Figure 1, there is shown a prior art metal insert 5 which is used in the formation of a resilient elastomeric bushing for an automobile suspension system. The metal insert 5 is hollow and formed by a uniform thickness sidewall 6 which has an outer diameter which, when measured normal to the center or longitudinal axis A-A of the insert 5, increases from a minimum at its opposing ends 7 and 8 to a maximum midway between the opposing ends 7 and 8, to form a longitudinal, cross sectional profile which looks like a smoothly rounded mountain peak or apex 9 with similar, sloping sides 10 and 11 which diverge from the rounded apex 9 in the direction of the center axis A-A and curve outwardly towards the adjacent opposing ends 7 and 8, respectively, where they terminate. The bulbous shaped metal insert 5 resembles an ornamental glass hurricane globe which is used as a decorative surround for such things as candlesticks. Such metal inserts are highly beneficial in reducing the resistance to conical loads, i.e. loads that are imposed perpendicular to, but offset from, the center of center axis A-A, thereby creating a moment about the center of center axis A-A. Conical loading is to be distinguished from axial loading, radial loading, or torsional loading about the center axis A-A.

With reference to Figure 2, there is shown a similarly shaped, new bulbous insert 15 which has all the structural benefits of the old, prior art bulbous all-metal insert 5, but with two main advantages; namely, greater strength and resistance to axial loads, and being simple and economical to manufacture. The new insert 15 comprises a hollow metal cylinder 16 with an outer cylindrical surface 17 to which is secured or bonded any durable plastic material, e.g. nylon, to form between the opposing ends 18,19 of the new insert 15 a bulbous portion 20 of plastic material which has a longitudinal, cross sectional profile which, like the profile of the all-metal prior art insert 5, resembles a smoothly rounded mountain peak or apex 21 with diverging and curved sides 22 and 23 which terminate at the opposing ends 18 and 19, respectively, of the inner metal cylinder 16 to provide a maximum amount of plastic material midway between the opposing ends 18 and 19 of the inner metal cylinder 16 and a thin, tapering layer of plastic material surrounding the inner metal cylinder 16 adjacent its opposing ends 18 and 19. The plastic bulbous portion 20 is symmetrical about the center axis B-B of the inner metal cylinder 16.

Thus, a new combination plastic/metal insert 15 is formed.

With reference to Figure 3, there is shown a resilient elastomeric bushing 25 which includes the new plastic/metal insert 15 to which is secured or molded a generally annularly shaped, resilient elastomeric intermediate member 26 which substantially surrounds the new, plastic/metal insert 15. The intermediate member 26 is formed of any suitable, resilient elastomeric material, such as rubber. The intermediate rubber member 26 has a pair of opposing, curved ends 27 and 28 with outer curved surfaces 29 and 30, respectively, which converge in the directions of the adjacent opposing ends 18 and 19 of the inner plastic/metal insert 15. The rubber member 26 has an integral, outstanding annular flange 31 adjacent one of its opposing ends, e.g. end 27. The annular flange 31 is in a plane that is normal to the center axis B-B of the plastic/metal insert 15. A hollow, cylindrical metal sleeve 32 surrounds the annular rubber member 26, and is designed to restrict lateral or radial expansion of the rubber member 26. The rigid, outer metal sleeve 32 has an integral, outstanding annular flange 33 which rests against the adjacent, rubber flange 31 of the intermediate member 26. The mode of construction of this surrounding elastomeric/metal element may be conventional and is not an essential element of the novel concept herein insofar as it relates to the insert.

The new insert 15 has an axial bore 34 for receiving a bolt (not shown) by which the bushing 25 is secured between the suspension system and vehicle body or chassis. Thus, the need for the strong inner metal cylinder 16 to resist axial loads can be appreciated.

Accordingly, there has been described an elastomeric bushing with a unique plastic/metal bulbous shaped insert which is economical to produce and has good strength to resist axial loads as well as conical and torsional loads.

## Claims

1. A bushing, comprising an innermost insert (15) which includes, a) a hollow metal cylinder (16) with a pair of opposing ends (18,19), a center bore (34) and an outer cylindrical surface (17), and b) durable plastic material (20) secured to the outer cylindrical surface (17) and at least partially surrounding the metal cylinder (16), the plastic material (20), in longitudinal cross sectional profile, including a smoothly rounded bulbous portion (21) curving outwardly from the metal cylinder intermediate the opposing ends (18,19) of the metal cylinder (16).

2. The bushing of claim 1, wherein the bulbous portion, in said profile, includes a pair of sides (22,23) which diverge in the direction of the metal cylinder and curve outwardly in the direction of the adjacent opposing ends of the metal cylinder where they terminate.

3. The bushing of claim 2, which includes resilient elastomeric material (26) secured in at least partially surrounding relation around the plastic material and metal cylinder.

4. The bushing of claim 3, which includes a rigid, hollow sleeve (32) at least partially surrounding the elastomeric material for restricting its radial expansion from the metal cylinder.

5. The bushing of claim 4, wherein the plastic is nylon, and the elastomeric material is rubber, and the sleeve is metal.
